# EUROPEAN PATENT APPLICATION

(11) **EP 2 977 594 A1**
(43) Date of publication of application: **27.01.2016**
(21) Application number: 15177742.2
(22) Date of filing: 21.07.2015
(51) Int. Cl.: F02D 41/02, F02D 41/08, F01L 1/053, F01L 1/14, F01L 1/18, F01L 1/344, F02D 13/02, F01L 1/047

(54) **CONTROL DEVICE FOR INTERNAL COMBUSTION ENGINE**

(30) Priority: 23.07.2014 JP 2014149975
(71) Applicant: Toyota Jidosha Kabushiki Kaisha, Toyota-shi, Aichi-ken 471-8571 (JP)
(72) Inventor: NASHIDA,, Yuki, Aichi-ken, 471-8571 (JP); HAYASHIDA,, Atsushi, Aichi-ken, 471-8571 (JP)
(74) Representative: D Young & Co LLP

(57) **Abstract**

An internal combustion engine is equipped with an intake camshaft (41) and a valve timing adjustment device (60). The intake camshaft (41) has an intra-axial oil channel (411), and an outflow hole (412) that causes hydraulic oil in the intra-axial oil channel (411) to flow out toward an intake valve (21). The valve timing adjustment device (60) discharges hydraulic oil to the intra-axial oil channel (411) in changing the valve timing. A controller (100) executes control for holding the valve timing when an execution condition including that idling operation of the internal combustion engine has continued for a predetermined time is not fulfilled, and executes fluctuation control for fluctuating the valve timing by controlling the valve timing adjustment device (60) when the aforementioned execution condition is fulfilled.

## Description

### BACKGROUND OF THE INVENTION

### 1. Field of the Invention

The invention relates to a control device for an internal combustion engine.

### 2. Description of Related Art

In German Patent Application Publication No. 102007054992, an example of a camshaft for opening/closing an intake valve or an exhaust valve is described. This camshaft is provided with an intra-axial oil channel that extends along an axis thereof, and an outflow hole that causes the hydraulic oil in the intra-axial oil channel to flow out toward the valve. The hydraulic oil that has flowed out from this outflow hole is supplied, as lubricating oil, to a sliding contact region between a valve stem and a valve guide, thus restraining the seizure thereof from occurring.

Besides, in Japanese Patent Application Publication No. 2012-149590 (JP 2012-149590 A), an example of a hydraulically driven valve timing adjustment device that adjusts a valve timing is described. This valve timing adjustment device is equipped with an oil control valve that controls the supply of hydraulic oil to a first oil chamber for advancement and a second oil chamber for retardation. This oil control valve is attached to a camshaft. When the valve timing is changed, hydraulic oil is discharged from the oil control valve to an intra-axial oil channel of the camshaft.

That is, when hydraulic oil is supplied to the first oil chamber through the operation of the oil control valve, the valve timing is advanced, and the hydraulic oil in the second oil chamber is discharged to the intra-axial oil channel of the camshaft through the oil control valve. On the other hand, when hydraulic oil is supplied to the second oil chamber through the operation of the oil control valve, the valve timing is retarded, and the hydraulic oil in the first oil chamber is discharged to the intra-axial oil channel of the camshaft through the oil control valve.

### SUMMARY OF THE INVENTION

By the way, at the time of high-speed rotation of an internal combustion engine, the valve timing is usually changed frequently, so hydraulic oil is frequently discharged from the valve timing adjustment device to the intra-axial oil channel of the camshaft. Therefore, when the camshaft is provided with the aforementioned outflow hole as described in, for example, German Patent Application Publication No. 102007054992, the hydraulic oil discharged from the valve timing adjustment device to the intra-axial oil channel is supplied to the sliding contact region between the valve stem and the valve guide, through the outflow hole. Accordingly, at the time of high-speed rotation of this internal combustion engine, the seizure in this sliding contact region can be restrained from occurring.

On the other hand, at the time of idling operation of the internal combustion engine, the valve timing is held equal to a certain timing suited for idling operation, so no hydraulic oil is discharged from the valve timing adjustment device to the intra-axial oil channel of the camshaft. Therefore, when idling operation is continued for a long time, the amount of hydraulic oil in the aforementioned sliding contact region becomes insufficient. As a result, seizure is likely to occur in the sliding contact region.

The invention provides a control device for an internal combustion engine that can restrain the seizure in a sliding contact region between a valve stem and a valve guide from occurring by ensuring an amount of hydraulic oil that is discharged to an intra-axial oil channel of a camshaft, even in the case where idling operation of the internal combustion engine is continued for a long time.

A control device for an internal combustion engine according to one aspect of the invention is applied to an internal combustion engine that is configured as follows. The internal combustion engine includes a valve, a camshaft, and a valve timing adjustment device. The camshaft has an intra-axial oil channel, and an outflow hole that causes hydraulic oil in the intra-axial oil channel to flow out toward the valve. The valve timing adjustment device (i) is hydraulically driven, (ii) has a first oil chamber for advancement and a second oil chamber for retardation, (iii) discharges the hydraulic oil in the second oil chamber to the intra-axial oil channel in advancing a valve timing, and (iv) discharges the hydraulic oil in the first oil chamber to the intra-axial oil channel in retarding the valve timing. The control device includes a controller that is configured to (i) execute control for holding the valve timing when an execution condition including that idling operation of the internal combustion engine has continued for a predetermined time is not fulfilled, and (ii) execute fluctuation control for fluctuating the valve timing by controlling the valve timing adjustment device when the execution condition is fulfilled.

According to the aforementioned configuration, immediately after the start of idling operation of the internal combustion engine, there is a sufficient amount of hydraulic oil in the sliding contact region between the valve stem and the valve guide. Therefore, the valve timing is held equal to a certain timing when the aforementioned execution condition is not fulfilled.

However, when the valve timing is thus held, no hydraulic oil is discharged from the valve timing adjustment device to the intra-axial oil channel. When there is no hydraulic oil in the intra-axial oil channel, no hydraulic oil is supplied to the aforementioned sliding contact region through the outflow hole. Then, when no hydraulic oil is supplied to the aforementioned sliding contact region, the amount of hydraulic oil in the aforementioned sliding contact region gradually decreases. Thus, in the aforementioned configuration, when the aforementioned execution condition is fulfilled, fluctuation control is executed, the valve timing changes, and hydraulic oil is discharged from the valve timing adjustment device to the intra-axial oil channel. As a result, the hydraulic oil flowing through the intra-axial oil channel is supplied, as lubricating oil, to the aforementioned sliding contact region. As a result, even in the case where idling operation of the internal combustion engine has continued for a long time, the seizure in the aforementioned sliding contact region can be restrained from occurring.

Incidentally, in the aforementioned control device, when the amount of deviation between a valve timing suited for idling operation of the internal combustion engine and an actual valve timing increases through the execution of fluctuation control, destabilization of idling operation of the internal combustion engine, such as the occurrence of a misfire, rough idling or the like, may be incurred. Therefore, in the aforementioned control device, fluctuation control may be control for alternately performing advancement and retardation of the valve timing. According to this configuration, the aforementioned amount of deviation is unlikely to increase, so idling operation of the internal combustion engine can be restrained from being destabilized through the execution of fluctuation control.

Incidentally, in the aforementioned control device, the valve timing adjustment device may include a housing and a vane rotor. The housing may rotate in synchronization with a crankshaft. The vane rotor may be arranged in the housing, and may rotate integrally with the camshaft. The housing may include a plurality of wall portions that protrude radially inward from an inner peripheral face of the housing. The vane rotor may include a vane that partitions a space between a pair of the wall portions that are adjacent to each other in a circumferential direction, into the first oil chamber and the second oil chamber. The valve timing adjustment device may change the valve timing by supplying the hydraulic oil to the first oil chamber or the second oil chamber and rotating the vane rotor relatively to the housing.

In the case where the valve timing adjustment device thus configured is adopted as a valve timing adjustment device, the fluctuation control may be control for fluctuating the valve timing within a predetermined range. The predetermined range may be a range between a first valve timing that is more advanced than a most retarded valve timing at which the vane abuts on one of the pair of the wall portions, and a second valve timing that is more retarded than a most advanced valve timing at which the vane abuts on the other of the pair of the wall portions. According to this configuration, the vane is unlikely to collide with the wall portions of the housing during the execution of fluctuation control. Therefore, abnormal noise and vibrations can be restrained from occurring as a result of such a collision.

When the fluctuation control as described above is executed, hydraulic oil can be supplied to the sliding contact region between the valve stem and the valve guide, but it becomes impossible to continue to hold the valve timing equal to a valve timing suited for idling operation of the internal combustion engine. On the other hand, after a sufficient amount of hydraulic oil has been supplied to the aforementioned sliding contact region, the aforementioned sliding contact region can be held in a sufficiently lubricated state for a while, even if hydraulic oil is stopped from being supplied to the aforementioned sliding contact region. Thus, in the aforementioned control device, the fluctuation control may be control to alternately repeat a fluctuation period in which the valve timing is fluctuated, and a stop period in which the valve timing is stopped from fluctuating. According to this configuration, when hydraulic oil is supplied to the aforementioned sliding contact region and the amount of hydraulic oil in the sliding contact region increases, a shift from the fluctuation period to the stop period is made, and the valve timing is held equal to a valve timing suited for idling operation of the internal combustion engine. Besides, when hydraulic oil is thus stopped from being supplied to the aforementioned sliding contact region and the amount of hydraulic oil in the sliding contact region decreases, a shift from the stop period to the fluctuation period is made, and the supply of hydraulic oil to the sliding contact region is resumed. That is, when there is a sufficient amount of hydraulic oil in the aforementioned sliding contact region, the valve timing can be held equal to a valve timing suited for idling operation of the internal combustion engine.

It should be noted herein that when a shift position of an automatic transmission that is provided in the vehicle is in a neutral range or a parking range, there is a low possibility of accelerator operation being performed, so idling operation of the internal combustion engine is likely to be continued for a long time. On the other hand, when the shift position of the automatic transmission is in a running range, there is a high possibility of accelerator operation being immediately performed to accelerate the vehicle, even in the case where the vehicle is stopped to start idling operation. Then, when accelerator operation is thus performed, the engine operation state changes to change the valve timing, so hydraulic oil is discharged from the valve timing adjustment device to the intra-axial oil channel of the camshaft. Therefore, the necessity to execute fluctuation control is low when the shift position of the automatic transmission is in the running range.

Thus, in the aforementioned control device, the controller may determine that the execution condition is not fulfilled, when the shift position of the automatic transmission that is provided in the vehicle is in the running range. According to this configuration, fluctuation control is executed if the aforementioned execution condition is fulfilled only when the shift position of the automatic transmission is in the neutral range or the parking range and idling operation is estimated to continue for a while. Therefore, during idling operation of the internal combustion engine, the valve timing can be restrained from being unnecessarily changed through the execution of fluctuation control.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a schematic configuration view showing part of a vehicle that is equipped with a controller as one embodiment of a control device for an internal combustion engine, and the internal combustion engine controlled by the controller;
FIG. 2 is a cross-sectional view showing a schematic configuration of an intake valve and peripheral members thereof;
FIG. 3 is a schematic configuration view showing a valve timing adjustment device for the intake valve, and an intake camshaft;
FIG. 4 is a schematic view illustrating a range in which a rotational phase of the intake camshaft relative to a crankshaft is allowed to fluctuate, in executing fluctuation control; and
FIG. 5 is a flowchart illustrating a processing routine that is executed by the controller to determine a timing for starting fluctuation control.

### DETAILED DESCRIPTION OF EMBODIMENTS

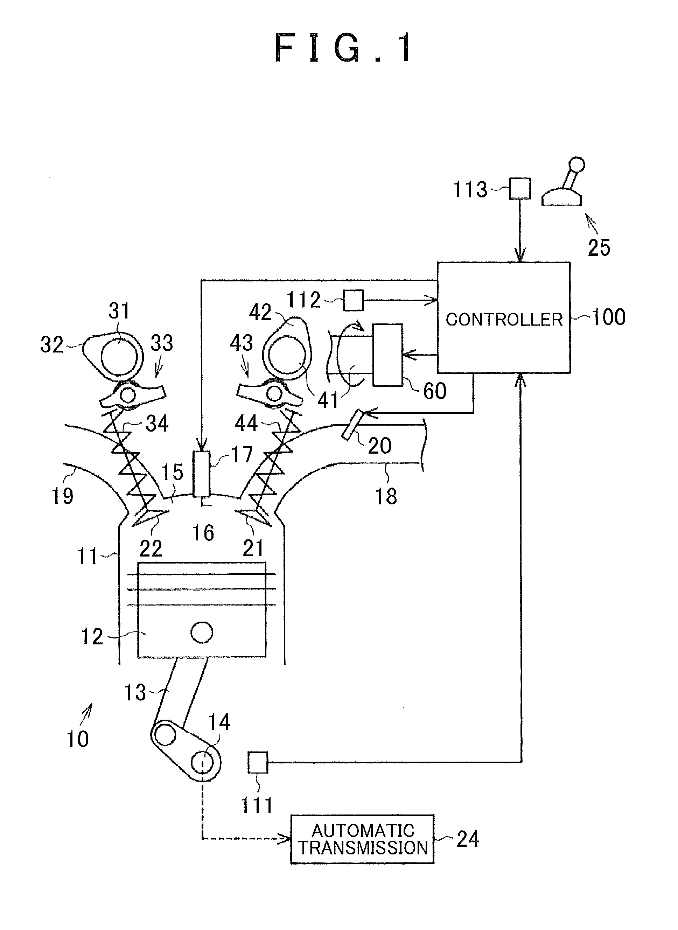

One embodiment of the invention as a concretization of a control device for an internal combustion engine will be described hereinafter with reference to FIGS. 1 to 5. FIG. 1 shows an internal combustion engine 10, and part of a vehicle that is equipped with a controller 100 that controls this internal combustion engine 10. This controller 100 is equivalent to "the control device for the internal combustion engine". As shown in FIG. 1, a reciprocating piston 12 is accommodated inside a cylinder 11 of the internal combustion engine 10. Reciprocating motions of this piston 12 are converted into rotating motions by a connecting rod 13, and are transmitted to a crankshaft 14. A rotational speed of this crankshaft 14 is detected by a crank position sensor 111.

Incidentally, rotation of the crankshaft 14 is decelerated by an automatic transmission 24, and is transmitted to driving wheels. A shift position of the automatic transmission 24 is selected through the operation of a shift device 25 by a driver of the vehicle. The automatic transmission 24 has a running range, a neutral range (an N range), and a parking range (a P range) as selectable shift positions. "The running range" includes both a forward range (a D range) for causing the vehicle to move forward, and a reverse range (an R range) for causing the vehicle to move backward. Besides, "the neutral range" is a range for keeping a drive torque of the internal combustion engine 10 from being transmitted to the driving wheels by holding the automatic transmission 24 in a neutral state. Besides, "the parking range" is a range that is used at the time of parking or the like so as to lock an output shaft of the automatic transmission 24.

Incidentally, as a rule, the driver often leaves the shift position of the automatic transmission 24 in the running range in temporarily stopping the vehicle, such as waiting for a traffic light to change etc., and often changes the shift position to the neutral range or the parking range in keeping the vehicle stopped for a long time. Therefore, when the shift position is in the running range, idling operation of the internal combustion engine 10 is estimated to continue for a relatively short time. When the shift position is in the neutral range or the parking range, idling operation of the internal combustion engine 10 is estimated to continue for a relatively long time.

Besides, in the internal combustion engine 10, a combustion chamber 16 is defined by an inner peripheral face of the cylinder 11, a top face of the piston 12, and a cylinder head 15. An ignition plug 17 is provided in an upper portion of the combustion chamber 16 in such a manner as to face the piston 12. Besides, an intake passage 18 through which intake air flows, and an exhaust passage 19 through which the exhaust gas discharged from the combustion chamber 16 flows are connected to the combustion chamber 16.

Fuel is injected into this intake passage 18 by a fuel injection valve 20. When an intake valve 21 is open, the mixture containing intake air and fuel is supplied from the intake passage 18 to the combustion chamber 16. Then, the mixture is burned by the ignition plug 17 in the combustion chamber 16. After that, when an exhaust valve 22 is open, exhaust gas is discharged from the combustion chamber 16 to the exhaust passage 19.

The internal combustion engine 10 is equipped with an exhaust camshaft 31 that rotates in such a manner as to interlock with rotation of the crankshaft 14, a valve gear mechanism 33 that converts rotating motions of a cam 32, which rotates integrally with the exhaust camshaft 31, into rectilinear motions, and a valve spring 34 that urges the exhaust valve 22 in a closing direction. Then, a power from the cam 32 is transmitted to the exhaust valve 22 through the valve gear mechanism 33, so the exhaust valve 22 is operated in an opening/closing manner.

Besides, the internal combustion engine 10 is equipped with an intake camshaft 41 that rotates in such a manner as to interlock with rotation of the crankshaft 14, a valve gear mechanism 43 that converts rotating motions of a cam 42, which rotates integrally with the intake camshaft 41, into rectilinear motions, and a valve spring 44 that urges the intake valve 21 in a closing direction. Then, a power from the cam 42 is transmitted to the intake valve 21 through the valve gear mechanism 43, so the intake valve 21 is operated in an opening/closing manner.

Furthermore, the internal combustion engine 10 is provided with a hydraulically driven valve timing adjustment device 60 that adjusts a rotational phase of the intake camshaft 41 relative to the crankshaft 14, namely, a valve timing as a timing for opening the intake valve 21. This valve timing adjustment device 60 adjusts the aforementioned relative rotational phase by controlling the rotational speed of the intake camshaft 41 relative to the rotational speed of the crankshaft 14.

In addition to the crank position sensor 111, a camshaft sensor 112 that detects a rotational speed of the intake camshaft 41, and a shift position sensor 113 that detects a shift position of the automatic transmission 24 are electrically connected to this controller 100 for controlling the internal combustion engine 10. This shift position sensor 113 detects a shift position by detecting a position of an operation lever of the shift device 25. Then, the controller 100 controls the internal combustion engine 10 based on information detected by various detection systems including these respective sensors 111 to 113.

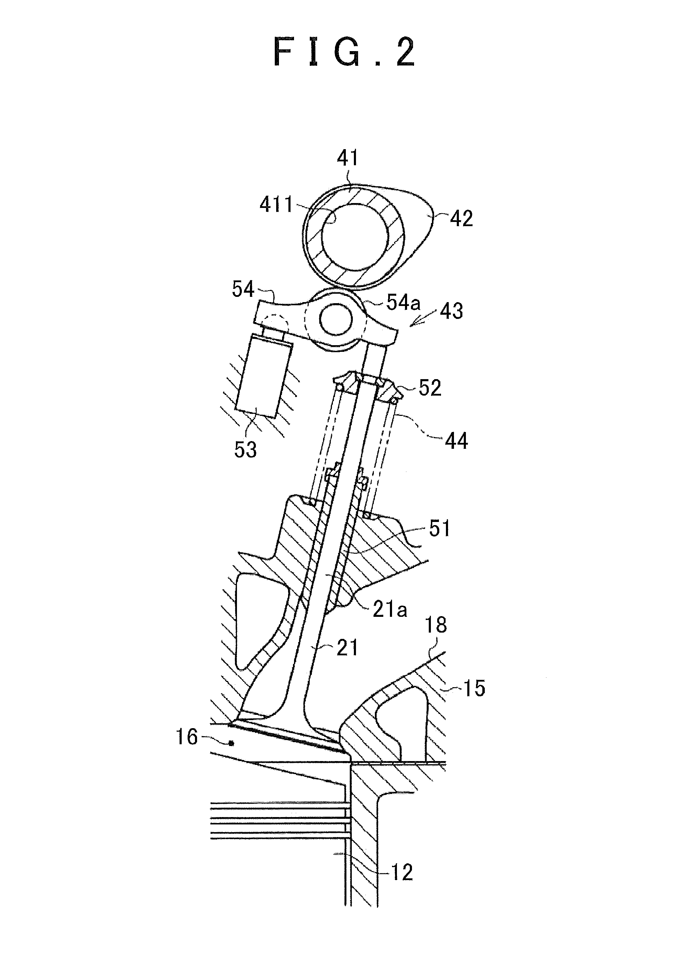

Next, the valve gear mechanism 43 that operates the intake valve 21 in an opening/closing manner, and peripheral members thereof will be described with reference to FIG. 2. As shown in FIG. 2, the intake valve 21 is located below the intake camshaft 41. Then, a valve stem 21a of the intake valve 21 is inserted through a valve guide 51 that is fixed to the cylinder head 15. That is, when the intake valve 21 is operated in an opening/closing manner, the valve stem 21a slides with respect to the valve guide 51. Besides, a retainer 52 is fixed to a tip side (an upper end side in the drawing) of the valve stem 21a of the intake valve 21. The valve spring 44 is arranged in a compressed state between this retainer 52 and the cylinder head 15.

Besides, the valve gear mechanism 43 for the intake valve is equipped with a lash adjuster 53 and a rocker arm 54. The rocker arm 54 is supported at one end thereof by the lash adjuster 53, and abuts at the other end thereof on the retainer 52. Besides, the rocker arm 54 is provided with a roller 54a that abuts on the intake valve 21. Then, when the intake camshaft 41 rotates as the engine operates, the rocker arm 54 rocks around its region supported by the lash adjuster 53, due to the effect of the cam 42. As a result, the intake valve 21 operates in an opening/closing manner.

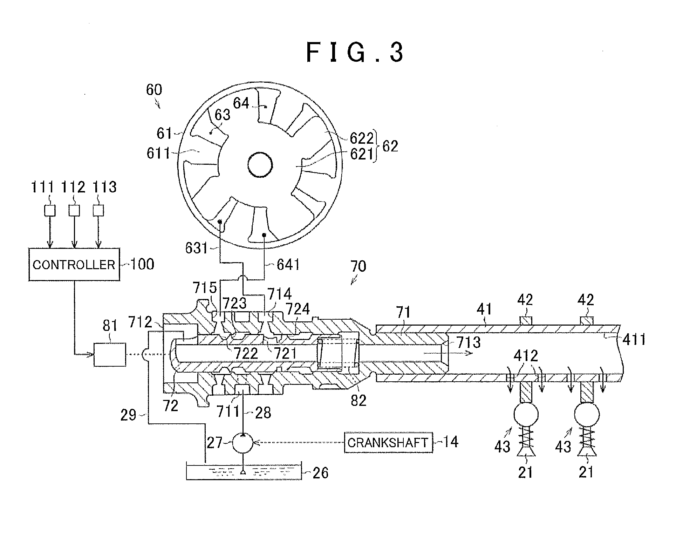

Next, the configuration of the intake camshaft 41 and the valve timing adjustment device 60 will be described with reference to FIG. 3. As shown in FIG. 3, the intake camshaft 41 assumes a cylindrical shape. The inside of the intake camshaft 41 constitutes an intra-axial oil channel 411 through which hydraulic oil flows. Besides, a peripheral wall of the intake camshaft 41 in the vicinity of each cam 42 is provided with outflow holes 412 that cause the hydraulic oil flowing through the intra-axial oil channel 411 to flow out from the intake camshaft 41. That is, the hydraulic oil in the intra-axial oil channel 411 is caused to flow out toward the intake valve 21 via the outflow holes 412. This hydraulic oil adheres to the cam 42, the rocker arm 54, the roller 54a, the intake valve 21 and the like as well. The hydraulic oil that has adhered to the intake valve 21 also enters a space between the valve stem 21a and the valve guide 51. Then, hydraulic oil functions as lubricating oil at lubrication necessitating locations such as a sliding contact region between the intake valve 21 and the valve guide 51, a space between the cam 42 and the roller 54a, and the like. Thus, the seizure of various components is restrained from occurring.

As shown in FIG. 3, the valve timing adjustment device 60 is equipped with a housing 61 that rotates in synchronization with the crankshaft 14, and a vane rotor 62 that is provided inside the housing 61 to rotate integrally with the intake camshaft 41. A plurality of wall portions 611 are provided in such a manner as to protrude radially inward from an inner peripheral face of the housing 61. These respective wall portions 611 are arranged in a circumferential direction around the intake camshaft 41. The vane rotor 62 has a boss 621 that is fixed to the intake camshaft 41, and a plurality of vanes 622 that protrude radially outward from the boss 621. Each of the vanes 622 is arranged between a corresponding pair of the wall portions 611 that are adjacent to each other in the circumferential direction. That is, the space between the aforementioned pair of the wall portions 611 that are adjacent to each other in the circumferential direction is partitioned into a first oil chamber 63 for advancement and a second oil chamber 64 for retardation by a corresponding one of the vanes 622.

Then, when hydraulic oil is supplied to the first oil chamber 63, the vane rotor 62 rotates relatively to the housing 61 clockwise in the drawing, and the hydraulic oil in the second oil chamber 64 is discharged to the outside of the housing 61. Thus, the rotational phase of the intake camshaft 41 relative to the crankshaft 14 changes toward an advancement side, so the valve timing is advanced. On the contrary, when hydraulic oil is supplied to the second oil chamber 64, the vane rotor 62 rotates relatively to the housing 61 counterclockwise in the drawing, and the hydraulic oil in the first oil chamber 63 is discharged to the outside of the housing 61. Thus, the aforementioned relative rotational phase changes toward a retardation side, so the valve timing is retarded.

Besides, the valve timing adjustment device 60 is provided with an oil control valve 70 that is connected to the intake camshaft 41, and an actuator 81. Then, the oil control valve 70 is operated by driving this actuator 81. Thus, the supply of hydraulic oil to the first oil chamber 63 and the supply of hydraulic oil to the second oil chamber 64 are controlled.

The oil control valve 70 is connected to an oil pump 27 that pumps up hydraulic oil from an oil pan 26, through a supply oil channel 28. The oil control valve 70 is also connected to the oil pan 26 through a discharge oil channel 29. Besides, the oil control valve 70 is connected to the first oil chamber 63 through an advancement oil channel 631, and is connected to the second oil chamber 64 through a retardation oil channel 641.

This oil control valve 70 has a cylindrical valve housing 71, and a spool 72 that moves forward and backward in an axial direction (in a lateral direction in the drawing) inside the valve housing 71. A tip (a right end in the drawing) of the valve housing 71 is press-fitted inside the intake camshaft 41. A first port 711 that communicates with the supply oil channel 28, a second port 712 that communicates with the discharge oil channel 29, a third port 713 that communicates with the intra-axial oil channel 411, a fourth port 714 that communicates with the advancement oil channel 631, and a fifth port 715 that communicates with the retardation oil channel 641 of the intake camshaft 41 are formed through this valve housing 71.

The spool 72 substantially assumes the shape of a bottomed cylinder, and is open at a right end thereof in the drawing while being closed at a left end thereof in the drawing. A plurality of annular grooves 722, 723, and 724 are formed in an outer peripheral face of a cylindrical portion of this spool 72 along the entire circumference thereof. Besides, a discharge hole 721 through which the inside and outside of the spool 72 communicate with each other is formed through the spool 72. When the first port 711 and the fourth port 714 are brought into communication with each other through the adjustment of an axial position of this spool 72, the fifth port 715 is brought into communication with the discharge hole 721. Thus, the hydraulic oil from the oil pump 27 is supplied to the first oil chamber 63 through the first port 711 and the fourth port 714, and the hydraulic oil in the second oil chamber 64 is discharged to the inside of the spool 72 through the fifth port 715 and the discharge hole 721.

Besides, when the first port 711 and the fifth port 715 are brought into communication with each other through the adjustment of the axial position of the spool 72, the fourth port 714 is brought into communication with the discharge hole 721. Thus, the hydraulic oil from the oil pump 27 is supplied to the second oil chamber 64 through the first port 711 and the fifth port 715, and the hydraulic oil in the first oil chamber 63 is discharged to the inside of the spool 72 through the fourth port 714 and the discharge hole 721.

Then, the hydraulic oil discharged to the inside of the spool 72 is caused to flow out from the oil control valve 70 through the second port 712 or the third port 713. At this time, the hydraulic oil caused to flow out from the third port 713 is discharged to the intra-axial oil channel 411 of the intake camshaft 41. Incidentally, in the present specification, the axial position of the spool 72 at the time when hydraulic oil is supplied to the first oil chamber 63 and hydraulic oil is discharged from the second oil chamber 64 is referred to as "an advancement position", and the axial position of the spool 72 at the time when hydraulic oil is supplied to the second oil chamber 64 and hydraulic oil is discharged from the first oil chamber 63 is referred to as "a retardation position".

Besides, a spring 82 that urges the spool 72 leftward in the drawing is provided in the valve housing 71 to the right of the spool 72 in the drawing. A pressing force acting opposite the direction of application of an urging force from the spring 82 (rightward in the drawing) is applied to the spool 72 from the actuator 81. That is, the actuator 81 adjusts the pressing force applied to the spool 72, thereby adjusting the axial position of the spool 72.

By the way, when the crankshaft 14 rotates at high speed due to the operation of an accelerator pedal or the like by the driver of the vehicle, the aforementioned relative rotational phase is frequently changed in such a manner as to interlock with a change in the operation state of this internal combustion engine 10. Therefore, the hydraulic oil in the first oil chamber 63 and the second oil chamber 64 is frequently discharged to the intra-axial oil channel 411 of the intake camshaft 41 through the oil control valve 70. Therefore, hydraulic oil is appropriately supplied to lubrication necessitating locations such as a sliding contact region between the valve stem 21 a and the valve guide 51, a space between the cam 42 and the roller 54a, and the like, through the outflow holes 412. On the other hand, when the internal combustion engine 10 is in idling operation, the operation state of the internal combustion engine 10 does not change. Therefore, the aforementioned relative rotational phase is usually held equal to a relative rotational phase suited for idling operation, for example, a most retarded phase. In this case, the aforementioned relative rotational phase is not changed, so the hydraulic oil in the first oil chamber 63 and the second oil chamber 64 is not discharged to the intra-axial oil channel 411. If this state is continued for a long time, the amount of lubricating oil becomes insufficient at the aforementioned lubrication necessitating locations. As a result, the seizure of the various components needed to open/close the intake valve 21 is likely to occur.

Thus, with the controller 100 according to the present embodiment of the invention, when the shift position of the automatic transmission 24 is in the neutral range or the parking range, idling operation of the internal combustion engine 10 is estimated to be continued for a long time, so fluctuation control for forcibly changing the aforementioned relative rotational phase from the relative rotational phase suited for the engine operation state at the time of idling operation of the internal combustion engine 10 (e.g., the most retarded phase) is executed. This fluctuation control is designed to forcibly change the aforementioned relative rotational phase (the valve timing) to a phase (a timing) different from the relative rotational phase (the valve timing) suited for the engine operation state at the time of idling operation.

When this fluctuation control is executed, the aforementioned relative rotational phase changes, and the hydraulic oil in the first oil chamber 63 and the second oil chamber 64 is discharged to the intra-axial oil channel 411 through the oil control valve 70. Then, the hydraulic oil in this intra-axial oil channel 411 is supplied to the aforementioned lubrication necessitating locations through the outflow holes 412, so the amount of hydraulic oil does not become insufficient at the lubrication necessitating locations. As a result, even in the case where idling operation of the internal combustion engine 10 is continued for a long time, the seizure of the various components needed to open/close the intake valve 21 does not occur.

Besides, during the execution of fluctuation control, the relative rotational phase suited for the engine operation state at the time of idling operation (e.g., the most retarded phase) is deviant from the aforementioned relative rotational phase, so idling operation is likely to be destabilized. Therefore, when the amount of hydraulic oil is not insufficient at the aforementioned lubrication necessitating locations, for example, immediately after the start of idling operation of the internal combustion engine 10 or the like, fluctuation control may not be executed. Thus, with the controller 100 according to the present embodiment of the invention, fluctuation control is executed on the condition that the shift position of the automatic transmission 24 be in the neutral range or the parking range and that idling operation of the internal combustion engine 10 have continued for a predetermined time. Thus, fluctuation control can be started after the amount of hydraulic oil at the aforementioned lubrication necessitating locations has become small due to the continuation of idling operation of the internal combustion engine 10.

Then, if the aforementioned relative rotational phase continues to be fluctuated for a certain period through fluctuation control, the aforementioned lubrication necessitating locations are sufficiently lubricated by hydraulic oil. Therefore, even when hydraulic oil is stopped from being supplied to the aforementioned lubrication necessitating locations, the aforementioned lubrication necessitating locations can be held in a sufficiently lubricated state for a while. Therefore, during the execution of fluctuation control, a fluctuation period in which the aforementioned relative rotational phase is forcibly fluctuated and a stop period in which the aforementioned relative rotational phase is stopped are alternately repeated. Thus, only when the amount of hydraulic oil at the aforementioned lubrication necessitating locations is small, the aforementioned relative rotational phase is forcibly changed, so hydraulic oil can be supplied to the aforementioned lubrication necessitating locations. Besides, when there is a sufficient amount of hydraulic oil at the aforementioned lubrication necessitating locations, the aforementioned relative rotational phase can be held equal to the relative rotational phase suited for the engine operation state at the time of idling operation (e.g., the most retarded phase).

Besides, fluctuation control executed by the controller 100 according to the present embodiment of the invention is designed to alternately change the aforementioned relative rotational phase toward the advancement side and the retardation side. Due to the execution of this fluctuation control, even when the amount of deviation between the relative rotational phase suited for the engine operation state at the time of idling operation (e.g., the most retarded phase) and the aforementioned actual relative rotational phase increases through, for example, a change in the aforementioned relative rotational phase toward the advancement side, the aforementioned amount of deviation can be reduced since the aforementioned relative rotational phase is thereafter changed toward the retardation side.

Besides, when the aforementioned relative rotational phase reaches the most advanced phase in changing the aforementioned relative rotational phase toward the advancement side through the execution of fluctuation control, the vanes 622 of the vane rotor 62 collide with the wall portions 611 of the housing 61 respectively, so abnormal noise and vibrations may occur as a result of the collision. By the same token, when the aforementioned relative rotational phase reaches the most retarded phase in changing the aforementioned relative rotational phase toward the retardation side through the execution of fluctuation control, the vanes 622 of the vane rotor 62 collide with the wall portions 611 of the housing 61 respectively, so abnormal noise and vibrations may occur as a result of the collision. Furthermore, when the amount of deviation between the relative rotational phase suited for the engine operation state at the time of idling operation (e.g., the most retarded phase) and the aforementioned actual relative rotational phase is made too large, a misfire of the internal combustion engine 10 may also be incurred.

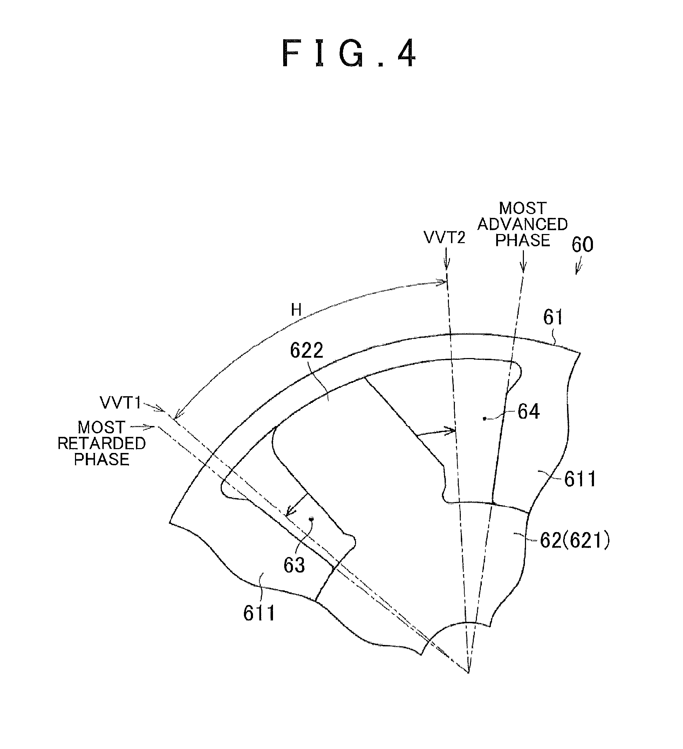

Thus, as shown in FIG. 4, a range H in which the aforementioned relative rotational phase is allowed to fluctuate during fluctuation control is set between a first phase VVT1 that is more advanced than the most retarded phase, and a second phase VVT2 that is more retarded than the most advanced phase. This second phase VVT2 is set such that a misfire of the internal combustion engine 10 does not occur. Therefore, when fluctuation control is executed, the aforementioned relative rotational phase is fluctuated within this range H. Thus, the vanes 622 are restrained from colliding with the wall portions 611 respectively, and a misfire of the internal combustion engine 10 is restrained from occurring.

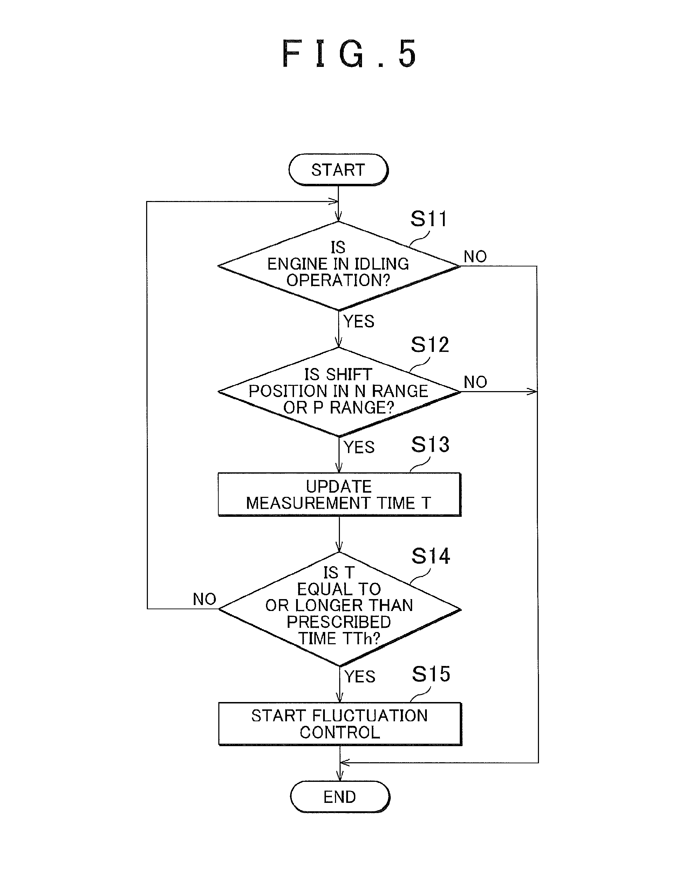

Next, a processing routine executed by the controller 100 to execute fluctuation control will be described with reference to a flowchart shown in FIG. 5. As shown in FIG. 5, in the present processing routine, the controller 100 determines whether or not the internal combustion engine 10 is in idling operation (step S11). For example, when the engine is in operation with the operation amount of the accelerator pedal equal to "0 (zero)", the controller 100 can determine that the internal combustion engine 10 is in idling operation. Then, if the internal combustion engine 10 is not in idling operation (NO in step S11), the controller 100 ends the present processing routine.

On the other hand, when the internal combustion engine 10 is in idling operation (YES in step S11), the controller 100 determines whether or not the shift position of the automatic transmission 24 is in the neutral range (the N range) or the parking range (the P range) (step S12). If the shift position is in neither the neutral range nor the parking range, the shift position is in the running range, so the controller 100 can estimate that idling operation of the internal combustion engine 10 will not be protracted. On the other hand, if the shift position is in the neutral range or the parking range, the controller 100 can estimate that idling operation of the internal combustion engine 10 will be protracted.

Therefore, if the shift position of the automatic transmission 24 is in neither the neutral range nor the parking range (NO in step S12), the controller 100 ends the present processing routine. On the other hand, if the shift position is in the neutral range or the parking range (YES in step S12), the controller 100 updates a measurement time T as an elapsed time from a time point when the shift position enters the neutral range or the parking range (step S13).

Then, the controller 100 determines whether or not the updated measurement time T is equal to or longer than a prescribed time TTh (step S14). This prescribed time TTh is a reference value for determining a timing for starting fluctuation control. If the measurement time T is shorter than the prescribed time TTh (NO in step S 14), the controller 100 shifts the process to the foregoing step S11. On the other hand, if the measurement time T is equal to or longer than the prescribed time TTh (YES in step S 14), the controller 100 starts fluctuation control (step S 15). After that, the controller 100 ends the present processing routine.

Next, the operation at the time of idling operation of the internal combustion engine 10 will be described. If the internal combustion engine 10 begins to be in idling operation (YES in step S11) and the shift position of the automatic transmission 24 is changed from the running range to the parking range (YES in step S12), the measurement of the measurement time T is started (step S13). While the shift position is thus held in the parking range, the aforementioned relative rotational phase is held equal to the relative rotational phase suited for the engine operation state at the time of idling operation (e.g., the most retarded phase), and no hydraulic oil is discharged from the valve timing adjustment device 60 to the intra-axial oil channel 411 of the intake camshaft 41. Therefore, no hydraulic oil is supplied from the intra-axial oil channel 411 to the lubrication necessitating locations such as the sliding contact region between the intake valve 21 and the valve guide 51, the space between the cam 42 and the roller 54a, and the like. As a result, the amount of hydraulic oil at the aforementioned lubrication necessitating locations gradually decreases.

Then, if the measurement time T reaches the prescribed time TTh (YES in step S 14), it is determined that idling operation of the internal combustion engine 10 has continued for a predetermined time or more, and fluctuation control is started (step S15). That is, when the condition that the shift position of the automatic transmission 24 be in the parking range or the neutral range and the condition that the aforementioned measurement time T be equal to or longer than the prescribed time TTh are all fulfilled, it is determined that the execution condition of fluctuation control is fulfilled, and fluctuation control is started. Then, during the fluctuation period of fluctuation control, the spool 72 of the oil control valve 70 in the valve timing adjustment device 60 is vibrated between the aforementioned advancement position and the aforementioned retardation position.

That is, when the spool 72 is located at the aforementioned advancement position, the aforementioned relative rotational phase is changed toward the advancement side, and the hydraulic oil in the second oil chamber 64 is discharged to the intra-axial oil channel 411. Then, when the aforementioned relative rotational phase reaches the second phase VVT2 (see FIG. 4), the spool 72 moves from the aforementioned advancement position toward the aforementioned retardation position. When the spool 72 is thus located at the aforementioned retardation position, the aforementioned relative rotational phase is changed toward the retardation side, and the hydraulic oil in the first oil chamber 63 is discharged to the intra-axial oil channel 411. Then, when the aforementioned relative rotational phase reaches the first phase VVT1 (see FIG. 4), the spool 72 moves from the aforementioned retardation position toward the aforementioned advancement position. That is, during the fluctuation period of fluctuation control, the change in the aforementioned relative rotational phase to the second phase VVT2 on the advancement side and the change in the aforementioned relative rotational phase to the first phase VVT1 on the retardation side are alternately repeated.

Thus, the hydraulic oil discharged from the first oil chamber 63 and the second oil chamber 64 flows through the intra-axial oil channel 411, and the hydraulic oil in the intra-axial oil channel 411 is supplied, as lubricating oil, to the lubrication necessitating locations such as the sliding contact region between the valve stem 21 a and the valve guide 51, the space between the cam 42 and the roller 54a, and the like, through the outflow holes 412. As a result, the amount of hydraulic oil at these lubrication necessitating locations is increased.

Then, when fluctuation control is executed for a certain period, a shift from the fluctuation period to the stop period is made. Then, the aforementioned relative rotational phase is returned to the relative rotational phase suited for the engine operation state at the time of idling operation (e.g., the most retarded phase), and is held equal thereto. That is, during the stop period of fluctuation control, no hydraulic oil is discharged from the valve timing adjustment device 60 to the intra-axial oil channel 411 of the intake camshaft 41. Therefore, the amount of hydraulic oil at the aforementioned lubrication necessitating locations gradually decreases. Then, when the amount of hydraulic oil at the aforementioned lubrication necessitating locations begins to be insufficient, a shift from the stop period to the fluctuation period is made. As a result, the aforementioned relative rotational phase is fluctuated again, and the hydraulic oil in the valve timing adjustment device 60 is supplied to the aforementioned lubrication necessitating locations through the intra-axial oil channel 411.

Incidentally, while fluctuation control is executed, the shift position of the automatic transmission 24 may be changed to the running range. In this case, fluctuation control is ended. As described above, the aforementioned configuration and operation make it possible to obtain the following effects.

(1) By executing fluctuation control during idling operation of the internal combustion engine 10, the aforementioned relative rotational phase changes, and hydraulic oil is discharged from the valve timing adjustment device 60 to the intra-axial oil channel 411 of the intake camshaft 41. As a result, the hydraulic oil in the intra-axial oil channel 411 is supplied, as lubricating oil, to the sliding contact region between the valve stem 21a and the valve guide 51, through the outflow holes 412. Accordingly, even in the case where idling operation of the internal combustion engine 10 is continued for a long time, the seizure in the aforementioned sliding contact region can be restrained from occurring.

(2) Fluctuation control is executed when the execution condition of fluctuation control including that idling operation has continued for a predetermined time is fulfilled. Thus, when there is a sufficient amount of hydraulic oil in the aforementioned sliding contact region immediately after the start of idling operation of the internal combustion engine 10, fluctuation control is not executed. However, when the amount of hydraulic oil in the aforementioned sliding contact region decreases, fluctuation control is started, and hydraulic oil is supplied to the aforementioned sliding contact region. Therefore, when the amount of hydraulic oil in the aforementioned sliding contact region is not insufficient yet immediately after the start of idling operation of the internal combustion engine 10, the aforementioned relative rotational phase can be restrained from unnecessarily changing.

(3) Besides, in fluctuation control, the fluctuation period in which the aforementioned relative rotational phase is fluctuated, and the stop period in which the aforementioned relative rotational phase is stopped from fluctuating are alternately repeated. Therefore, when the amount of hydraulic oil in the aforementioned sliding contact region increases due to the execution of fluctuation control, the aforementioned relative rotational phase can be stopped from fluctuating. When the amount of hydraulic oil in the aforementioned sliding contact region decreases due to the stop of the fluctuation in the aforementioned relative rotational phase, the fluctuation in the aforementioned relative rotational phase can be resumed. That is, when there is a sufficient amount of hydraulic oil in the aforementioned sliding contact region, the aforementioned relative rotational phase can be held equal to the relative rotational phase suited for the engine operation state at the time of idling operation.

(4) Besides, during the fluctuation period of fluctuation control, the change in the aforementioned relative rotational phase toward the advancement side and the change in the aforementioned relative rotational phase toward the retardation side are alternately repeated. Thus, the amount of deviation between the aforementioned relative rotational phase suited for idling operation and the aforementioned actual relative rotational phase is unlikely to increase. Therefore, idling operation can be restrained from being destabilized as a result of the execution of fluctuation control.

(5) Besides, the range H in which the aforementioned relative rotational phase is allowed to be changed through fluctuation control is set between the first phase VVT1 that is more advanced than the most retarded phase, and the second phase VVT2 that is more retarded than the most advanced phase. Accordingly, during the execution of fluctuation control, the vanes 622 of the vane rotor 62 are restrained from colliding with the wall portions 611 of the housing 61 respectively, so abnormal noise and vibrations can be restrained from occurring as a result of the collision.

(6) Besides, in the present embodiment of the invention, when the shift position of the automatic transmission 24 is in the running range and idling operation is estimated not to be protracted, fluctuation control is not executed. In other words, fluctuation control is executed only when the shift position is in the neutral range or the parking range and idling operation of the internal combustion engine 10 is estimated to be continued for a long time. Therefore, at the time of idling operation of the internal combustion engine, the aforementioned relative rotational phase can be restrained from being unnecessarily changed through the execution of fluctuation control.

Incidentally, the aforementioned embodiment of the invention may be changed into other embodiments of the invention as will be described below. Even in the case where the shift position of the automatic transmission 24 is in the running range, when the internal combustion engine 10 is in idling operation under the circumstances where, for example, braking operation is performed, the execution of fluctuation control may be permitted. In this case, a time when the condition that braking operation be performed and the condition that the internal combustion engine 10 be in idling operation are both fulfilled may be measured as a continuation time, and fluctuation control may be executed when this continuation time becomes equal to or longer than a prescribed time. In this case, however, it is preferable to swiftly end fluctuation control when the cancellation of braking operation is detected.

When the relative rotational phase suited for the engine operation state at the time of idling operation is a phase that is more advanced than the most retarded phase and more retarded than the most advanced phase (which will be referred to as "an idling optimal phase"), the range H in which the aforementioned relative rotational phase is allowed to fluctuate in fluctuation control may be set to include the idling optimal phase. This configuration also makes it possible to obtain an effect similar to that of the aforementioned embodiment of the invention.

When the condition that the shift position of the automatic transmission 24 be in the neutral range or the parking range and the condition that the aforementioned measurement time T be equal to or longer than the prescribed time TTh are both fulfilled, namely, when the execution condition of fluctuation control is fulfilled, the stop period may not be provided, and the aforementioned relative rotational phase may be continued to be fluctuated. This configuration also makes it possible to obtain an effect similar to the aforementioned (1) and (6).

The range H in which the aforementioned relative rotational phase is allowed to fluctuate through the execution of fluctuation control may be arbitrarily set within such a range that a misfire of the internal combustion engine 10 is not caused. For example, the aforementioned range H may be set to include the most retarded phase if a misfire does not occur even when the aforementioned relative rotational phase is set to the most retarded phase. Besides, the aforementioned range H may be set to include the most advanced phase if a misfire does not occur even when the aforementioned relative rotational phase is set to the most advanced phase. This configuration also makes it possible to obtain an effect similar to the aforementioned (1).

If a sufficient amount of hydraulic oil can be supplied to the aforementioned lubrication necessitating locations by changing the aforementioned relative rotational phase toward the advancement side or the retardation side only once, fluctuation in the aforementioned relative rotational phase toward the advancement side and fluctuation in the aforementioned relative rotational phase toward the retardation side may not be repeated in the fluctuation period of fluctuation control. For example, when the relative rotational phase suited for the engine operation state at the time of idling operation is the most retarded phase, the aforementioned relative rotational phase may be changed from the most retarded phase to the aforementioned second phase VVT2 in the fluctuation period of fluctuation control. In this case, when a shift from the fluctuation period to the stop period is made, the aforementioned relative rotational phase is returned to the most retarded phase. At this time as well, hydraulic oil is discharged from the valve timing adjustment device 60 to the intra-axial oil channel 411 of the intake camshaft 41. This configuration also makes it possible to obtain an effect similar to the aforementioned (1).

In the aforementioned embodiment of the invention, the measurement of the measurement time T is started as soon as the shift position of the automatic transmission 24 enters the neutral range or the parking range. However, even in the case where the shift position is in the running range, when idling operation of the internal combustion engine 10 is started, the measurement time T from the time point of the start of idling operation may be measured. In this case, even if the shift position is changed from the running range to the neutral range or the parking range when the internal combustion engine 10 is in idling operation and the measurement time T is measured, it is preferable that the measurement of the measurement time T be continued. In this configuration, when the internal combustion engine 10 is in idling operation, the number of opportunities to execute fluctuation control increases.

In some cases, the internal combustion engine 10 is equipped with a valve timing adjustment device that adjusts the valve timing of the exhaust valve 22, namely, the rotational phase of the exhaust camshaft 31 relative to the crankshaft 14. Then, an oil control valve of the valve timing adjustment device for the exhaust valve is connected to the exhaust camshaft 31. When the hydraulic oil discharged from the valve timing adjustment device flows through an intra-axial oil channel of the exhaust camshaft 31, fluctuation control for fluctuating the valve timing of the exhaust valve 22 may be executed during idling operation of the internal combustion engine 10. In this case, when fluctuation control is executed during idling operation of the internal combustion engine 10, the hydraulic oil discharged from the valve timing adjustment device for the exhaust valve is supplied to a sliding contact region between a valve stem and a valve guide of the exhaust valve 22, through the intra-axial oil channel of the exhaust camshaft 31. As a result, the seizure of the sliding contact region between the valve stem and the valve guide of the exhaust valve 22 can be restrained from occurring.

## Claims

1. A control device for an internal combustion engine (10), the internal combustion engine (10) including
a valve (21),
a camshaft (41) that has an intra-axial oil channel (411), and an outflow hole (412) that causes hydraulic oil in the intra-axial oil channel (411) to flow out toward the valve (21), and
a valve timing adjustment device (60) that is hydraulically driven, the valve timing adjustment device (60) having a first oil chamber (63) for advancement and a second oil chamber (64) for retardation, the valve timing adjustment device (60) being configured to discharge the hydraulic oil in the second oil chamber (64) to the intra-axial oil channel (411) in advancing a valve timing, and the valve timing adjustment device (60) being configured to discharge the hydraulic oil in the first oil chamber (63) to the intra-axial oil channel (411) in retarding the valve timing,
the control device **characterized by** comprising:
a controller (100) configured to
(i) execute control for holding the valve timing when an execution condition including that idling operation of the internal combustion engine (10) has continued for a predetermined time is not fulfilled, and
(ii) execute fluctuation control for fluctuating the valve timing by controlling the valve timing adjustment device (60) when the execution condition is fulfilled.

2. The control device according to claim 1, **characterized in that**
the fluctuation control is control for alternately performing advancement and retardation of the valve timing.

3. The control device according to claim 1 or 2, **characterized in that**
the valve timing adjustment device (60) includes a housing (61) and a vane rotor (62),
the housing (61) is configured to rotate in synchronization with a crankshaft (14),
the vane rotor (62) is arranged in the housing (61), and the vane rotor (62) is configured to rotate integrally with the camshaft (41),
the housing (61) includes a plurality of wall portions (611) that protrude radially inward from an inner peripheral face of the housing (61),
the vane rotor (62) includes a vane (622) that partitions a space between a pair of the wall portions (611) that are adjacent to each other in a circumferential direction, into the first oil chamber (63) and the second oil chamber (64),
the valve timing adjustment device (60) is configured to change the valve timing by supplying the hydraulic oil to the first oil chamber (63) or the second oil chamber (64) and rotating the vane rotor (62) relatively to the housing (61),
the fluctuation control is control for fluctuating the valve timing within a predetermined range, and
the predetermined range is a range between a first valve timing (VVT1) that is more advanced than a most retarded valve timing at which the vane (622) abuts on one of the pair of the wall portions (611), and a second valve timing (VVT2) that is more retarded than a most advanced valve timing at which the vane (622) abuts on the other of the pair of the wall portions (611).

4. The control device according to any one of claims 1 to 3, **characterized in that**
the fluctuation control is control to alternately repeat a fluctuation period in which the valve timing is fluctuated, and a stop period in which the valve timing is stopped from fluctuating.

5. The control device according to any one of claims 1 to 4, **characterized in that**
the internal combustion engine (10) is mounted in a vehicle, and
the controller is configured to determine that the execution condition is not fulfilled, when a shift position of an automatic transmission (24) that is provided in the vehicle is in a running range.

6. The control device according to any one of claims 1 to 5, **characterized in that**
the internal combustion engine (10) is mounted in a vehicle, and
the controller (100) is configured to determine that the execution condition is fulfilled, when a shift position of an automatic transmission (24) that is provided in the vehicle is in one of a neutral range and a parking range.

7. The control device according to claim 6, **characterized in that**
the controller (100) is configured to measure a measurement time after change of the shift position to one of the neutral range and the parking range, and
the controller (100) is configured to determine that the execution condition is fulfilled, when the measurement time is equal to or longer than a prescribed time.
